(19) Europäisches Patentamt
European Patent Office
Office européen des brevets

(11) Veröffentlichungsnummer: **0 321 831**
**A2**

(12) # EUROPÄISCHE PATENTANMELDUNG

(21) Anmeldenummer: **88120788.0**

(51) Int. Cl.⁴: **G11B 7/24 , C08L 69/00**

(22) Anmeldetag: **13.12.88**

(30) Priorität: **22.12.87 DE 3743491**

(43) Veröffentlichungstag der Anmeldung:
**28.06.89 Patentblatt 89/26**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Serini, Volker, Dr.**
**Sebastian-Kneipp-Weg 2**
**D-4150 Krefeld(DE)**
Erfinder: **Berg, Klaus, Dr.**
**Hansastrasse 124**
**D-4150 Krefeld(DE)**
Erfinder: **Grigo, Ulrich, Dr.**
**Michelsheide 9**
**D-4152 Kempen(DE)**
Erfinder: **Morbitzer, Leo, Dr.**
**Rungestrasse 50**
**D-5000 Köln 80(DE)**
Erfinder: **Piejko, Karl-Erwin, Dr.**
**Unterscheider Weg 7a**
**D-5060 Bergisch Gladbach 2(DE)**
Erfinder: **Sümmermann, Klaus, Dr.**
**Von-Steinen-Strasse 1**
**D-5758 Fröndenberg-Frömern(DE)**

(54) **Verwendung von Mischungen aus Polycarbonaten und Styrolpolymerisaten als Substrate für optische Speicher.**

(57) Gegenstand der vorliegenden Erfindung ist die Verwendung von Mischungen bestehend aus 5 bis 95 Gew.% eines aromatischen Polycarbonates, dessen lineare Ketten von 0,1 Mol% bis 50 Mol% bifunktionelle Struktureinheiten der Formel (1) enthalten,

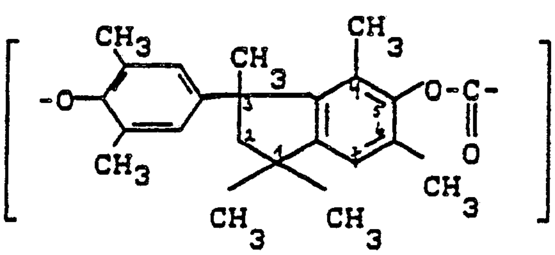

(1)

und 95 bis 5 Gew.% eines thermoplastischen Styrolpolymerisats und gegebenenfalls üblichen Additiven, als Substrate für optische Speicher.

EP 0 321 831 A2

# Verwendung von Mischungen aus Polycarbonaten und Styrolpolymerisaten als Substrate für optische Speicher

Gegenstand der vorliegenden Erfindung ist die Verwendung von Mischungen bestehend aus

a) 5 bis 95 Gew.% eines aromatischen Polycarbonates, dessen lineare Ketten von 0,1 Mol% bis 50 Mol% bifunktionelle Struktureinheiten der Formel (1)

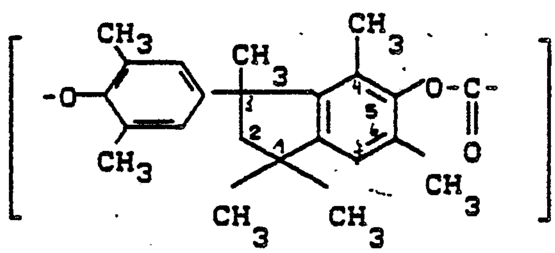

(1)

und 99,9 Mol% bis 50 Mol% andere bifunktionelle Struktureinheiten der Formel (2)

$[-O-D-O-\underset{\underset{O}{\|}}{C}-]$ (2)

enthalten, worin -O-D-O- andere Diphenolat-Reste als die in der Formel (1) sind,

b) 95 bis 5 Gew% eines thermoplastischen Styrolpolymerisats und gegebenenfalls

c) üblichen Additiven in üblichen Mengen, wobei die Summe der Komponenten a) + b) jeweils 100 Gew% beträgt und die Menge an Additiv c) sich auf jeweils 100 Gew% der Summe der Komponenten a) + b) bezieht, als Substrate für optische Speicher.

Die erfindungsgemäß einsetzbaren, aromatischen Polycarbonate enthalten bevorzugt 0,2 bis 35 Mol-%, besonders bevorzugt 0,5 bis 25 Mol-% und insbesondere 2 bis 15 Mol-% Polycarbonateinheiten aus 1,1,3,4,6-Pentamethyl-3-(3,5-dimethyl-4-hydroxyphenyl)-indan-5-ol gemäß Formel (1).

Unter einem Polycarbonat im Sinne der Erfindung wird auch eine Mischung von mindestens zwei unterschiedlichen Polycarbonaten verstanden, vorausgesetzt, daß die Mischung die Anforderungen erfüllt, die in den Ansprüchen und im Text für das Polycarbonat genannt sind. Dabei kann mindestens eins der Polycarbonate der Mischung auch von der Zusammensetzung abweichen, die für das erfindungsgemäß einzusetzende Polycarbonat genannt wird, vorausgesetzt, daß die Mischung insgesamt der genannten Zusammensetzung entspricht. Wenn mindestens zwei Polycarbonate eingesetzt werden, können diese vor der Mischung mit dem Styrolpolymerisat oder auch gleich gemeinsam mit diesem gemischt werden, so z.B. über die Schmelze.

Unter einem Styrolpolymerisat im Sinne der Erfindung wird auch eine Mischung von mindestens zwei unterschiedlichen Styrolpolymerisaten verstanden, wobei für diese Mischung sinnentsprechend gilt, was vorstehend für eine Mischung von Polycarbonaten gesagt wurde.

Die Polycarbonate gemäß Komponente a) sind aus der DE-OS 2 615 038 (Le A 16 842) bekannt beziehungsweise gemäß der Lehre der DE-OS 2 615 038 erhältlich.

Bezüglich möglichen Abmischungen mit Kunststoffen, die keine Polycarbonate sind, wird nur vermerkt, daß die Polycarbonate mit Struktureinheiten der Formel (1) mit anderen Polymermaterialien gemischt werden können (Seite 10, Zeilen 19/20 der DE-OS).

Bezüglich der Verwendung als Substrate für optische Datenspeicher enthält die DE-OS keine Hinweise.

Auch aus der DE-OS 2 901 668 (Le A 19 146) sind Polycarbonate gemäß Komponente a) bekannt. Abmischungen oder optische Verwendungen dieser Polycarbonate sind in der DE-OS 2 901 668 nicht angesprochen.

Aus der DE-OS 2 901 665 (Le A 19 040) sind ebenfalls Polycarbonate gemäß Komponente a) bekannt. Auf Seite 20 dieser DE-OS wird auf Abmischungen dieser Polycarbonate mit anderen Polycarbonaten und auf Modifizierungen dieser Polycarbonate mit PVC hingewiesen, wobei im letzten Fall zusätzlich kautschukmodifizierte thermoplastische Harze zugemischt werden können, wobei letztere Harze gemäß DE-OS 2 901 665 zitierter DE-OS 2 402 177 Seite 9 auch Mischungen von thermoplastischen Harzen mit Pfropfpolymerisaten oder mit Kautschuken sein können. Auch in der DE-OS 2 901 665 wird die optische Verwendung nicht angesprochen.

Aus der DE-OS 3 118 697 (Le A 21 047) sind ebenfalls Polycarbonate gemäß Komponente a) bekannt (Seite 11 letzter Absatz und Seite 12, erster Absatz der DE-OS) mit Polyalkylenterephthalat und gegebenenfalls Polymerisaten mit einer Glasübergangstemperatur von unter -20 °C abgemischt sind. Eine optische Verwendung wird in diesen DE-OS nicht angesprochen.

Aus der DE-OS 3 118 861 (Le A 21 048) sind ebenfalls Polycarbonate gemäß Komponente a) bekannt (Seite 10, Absatz 1 der DE-OS), die mit Pfropfpolymerisaten mit einer Glasübergangstemperatur von unter -20 °C abgemischt sind. Diese DE-OS enthält ebenfalls keinen Hinweis auf eine optische Verwendung.

Aus der EP-OS 0 103 230 (Le A 21 835) sind Mischungen von Polycarbonaten gemäß Komponente a), Styrolpolymerisaten und Polyphosphaten bekannt.Die EP-OS enthält keinen Hinweis auf eine optische Verwendung.

Aus der DE-OS 3 344 101 (Le A 22 589) sind Mischungen von Polycarbonaten gemäß Komponente a) mit Styrolpolymeren bekannt. Die DE-OS 3 344 101 enthält jedoch keinen Hinweis auf eine optische Verwendung der Mischungen der DE-OS 3 344 101.

Aus der EP-OS 0 173 869 (Le A 22 925) sind Mischungen von Polycarbonaten gemäß Komponente a) mit Styrolpolymeren und mit Phosphatestern bekannt. Die EP-OS enthält keinen Hinweis auf eine optische Verwendung.

In der japanischen Offenlegungsschrift Sho-61-19656 werden Gemische aus Polycarbonaten mit Styrolharz-Copolymeren beschrieben, die als Rohstoffe für optische Apparate empfohlen werden. Die Polycarbonate werden aus Bisphenolen hergestellt, von denen eine Anzahl aufgeführt wird, darunter auch 2,2-Bis-(4′-hydroxy-3′,5′-dimethylphenyl)-propan. In den Beispielen wird allerdings ausschließlich Bisphenol-A-Polycarbonat eingesetzt. Das Indanbisphenol (3) ist nicht aufgeführt.

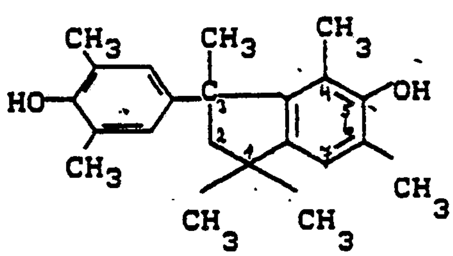

(3)

Aus der EP-OS 0 199 824 ist ebenfalls die Verwendung von Harzgemischen für optische Zwecke beschrieben. Als Harze sind sowohl Polycarbonate als auch Styrolharze genannt. Die Verträglichkeit der verschiedenen Harze wird dabei durch die dritte Komponente verbessert. Als Polycarbonate sind jedoch solche gemäß Komponente a) der vorliegenden Erfindung in der EP-OS 0 199 824 nicht aufgeführt.

Den bifunktionellen Struktureinheiten der Formel (2) können beliebige andere Diphenole als das der Formel (3) zugrundeliegen.

Geeignete andere Diphenole der Formel (4) HO-D-OH sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α′-Bis-(hydroxyphenyl)-diisopropylbenzole sowie entsprechende substituierte Verbindungen.

Die Diphenole der Formel (4) sind entweder bekannt oder nach bekannten Verfahren herstellbar. (Siehe dazu beispielsweise Hermann Schnell, Chemistry and Physics of Polycarbonates, Polymer Reviews, Volume 9, Interscience Publishers, New York, 1964, die Veröffentlichung V. Serini, D. Freitag, H. Vernaleken, Polycarbonate aus o, o, o′, o′-tetramethylsubstituierten Bisphenolen, Angew. Makrom. Chem. <u>55</u>, (1976), 175 - 189, und deutsche Offenlegungsschriften 2 063 050, 2 211 957, 2 248 817 und 2 615 038).

Beispiele für geeignete Diphenole (4) sind
2,2-Bis-(4-hydroxyphenyl)-propan,
2,2-Bis-(4-hydroxyphenyl)-sulfid,
1,1-Bis-(4-hydroxyphenyl)-cyclohexan,

1,1-Bis-(4-hydroxyphenyl)-1-phenyl-ethan,
$\alpha,\alpha'$-Bis-(4-hydroxyphenyl)-p-diisopropylbenzol,
2,2-Bis-(3-methyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
Bis-(3,5-dimethyl-4-hydroxyphenyl)-methan,
2,2-Bis-(3,5-dimethyl-4-hydroxyphenyl)-propan und
$\alpha,\alpha'$-Bis-(3,5-dimethyl-4-hydroxyphenyl)-p-diisopropylbenzol.

Bevorzugte Diphenole der Formel (4) sind solche der Formel (5)

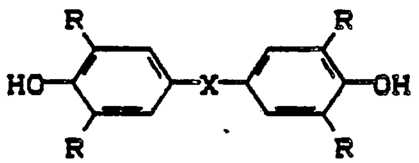 (5)

in der R unabhängig voneinander $C_1$-$C_3$ Alkyl, bevorzugt Methyl, und X eine Einfachbindung, O, S, $SO_2$, CO, einen Alkylen- oder Alkylidenrest mit 1 - 15 C-Atomen, bevorzugt 1 - 5 C-Atomen, einen Cycloalkylen- oder Cycloalkylidenrest mit 5 - 15 C-Atomen, bevorzugt mit 5 - 10 C-Atomen, oder

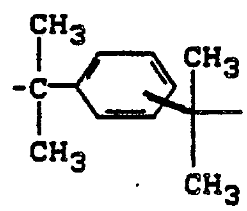

bedeuten können.

Den bifunktionellen Einheiten der Formel (2) liegen bevorzugt mindestens 50 Mol-%, besonders bevorzugt mindestens 80 Mol-% und insbesondere 100 Mol-% Diphenole der Formel (5) zugrunde.

Besonders bevorzugte Diphenole (5) sind solche, in denen R = $CH_3$ und X ein $C_1$-$C_5$-Alkylenrest oder $C_2$-$C_5$-Alkylidenrest ist. Beispiele dafür sind
Bis-(3,5-dimethyl-4-hydroxyphenyl)-methan,
2,2-Bis-(3,5-dimethyl-4-hydroxyphenyl)-propan,
2,2-Bis-(3,5-dimethyl-4-hydroxyphenyl)-butan,
2,4-Bis-(3,5-dimethyl-4-hydroxyphenyl)-2-methylbutan und
$\alpha,\alpha'$-Bis-(3,5-dimethyl-4-hydroxyphenyl)-p-diisopropylbenzol.

Besonders bevorzugt davon sind
Bis-(3,5-dimethyl-4-hydroxyphenyl)-methan,
2,2-Bis-(3,5-dimethyl-4-hydroxyphenyl)-propan und
2,2-Bis-(3,5-dimethyl-4-hydroxyphenyl)-butan.

Insbesonders bevorzugtes Diphenol der Formel (5) ist 2,2-Bis-(3,5-dimethyl-4-hydroxyphenol)-propan.

Die Herstellung der erfindungsgemäß einzusetzenden Polycarbonate der Komponente a) ist literaturbekannt, wie bereits eingangs dargelegt.

Für die Einstellung des Molekulargewichts der erfindungsgemäß einsetzbaren Polycarbonate können Kettenbegrenzer eingesetzt werden. Solche Kettenbegrenzer sind in der Literatur vielfach beschrieben. Es sind monofunktionelle Verbindungen, die mit Bisphenol bzw. dem eingesetzten Kohlensäureabkömmling reagieren können, wie z.B. Amine, Phenole, Carbonsäuren und deren Abkömmlinge. Bevorzugt werden die Phenole, wie z.B. Phenol, o-Kresol, 2,6-Dimethylphenol, p-tertiär-Butylphenol und insbesonders Phenole der Formel

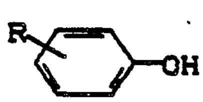 ,

in denen R einen verzweigten Alkylrest mit 8 - 9 C-Atomen darstellt, wobei Phenole der Formel

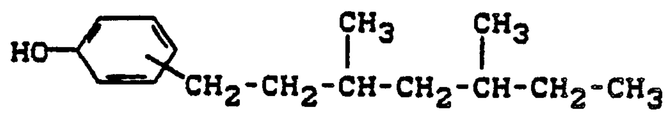

und insbesondere der Formel

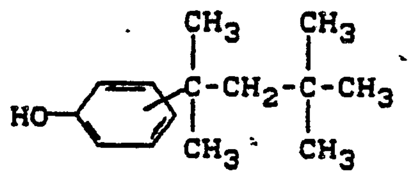

bevorzugt werden. Besonders bevorzugt wird das p-Isooctyl-Phenol der Formel

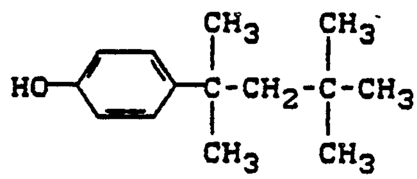

Die Molekulargewichte der erfindungsgemäß einsetzbaren Polycarbonate können in weiteren Grenzen variieren. Bevorzugt werden Polycarbonate mit Molekulargewichten $M_w$ von 6000 - 125 000, besonders bevorzugt von 12 000 -60 000, ganz besonders bevorzugt von 17 000 - 43 000 und insbesondere von 21 000 - 31 000.

Die erfindungsgemäß einsetzbaren Polycarbonate können durch den Einbau geringer Mengen, vorzugsweise von Mengen zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxygruppen verzweigt sein. Polycarbonate dieser Art sind literaturbekannt.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2,-Bis-[4,4-bis-(hydroxyphenyl)-cyclohexyl]-propan, 2,4-Bis-(4-hydroxyphenylisopropyl)-phenol, 2,6-Bis-(2-hydroxy-5′-methylbenzyl)-4-methylphenol, 2-(4-Hydroxyphenyl)-2-(2,4-dihydroxyphenyl)-propan, Hexa-[4-(4-hydroxyphenylisopropyl)-phenyl]-ortho-terephthalsäureester, Tetra-(4-hydroxyphenyl)-methan, Tetra-[4-(4-hydroxyphenylisopropyl)-phenoxy]-methan und 1,4-Bis-[4′,4″-dihydroxytriphenyl)-methyl]-benzol. Einige der sonstigen dreifunktionellen Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Die erfindungsgemäß einzusetzenden Polycarbonate gemäß Komponente a) können anstelle der Kohlensäurereste andere Dicarbonsäurereste in Mengen kleiner ≤40 Mol%, vorzugsweise kleiner ≤25 Mol% und insbesondere ≤10 Mol%, bezogen jeweils auf die Molsumme an Säureestern im Polycarbonat, enthalten.

Diese anderen Dicarbonsäurereste können aliphatischen und/oder aromatischen Dicarbonsäuren entstammen, vorzugsweise aromatischen Dicarbonsäuren. Beispiele für aromatische Dicarbonsäuren sind Isophthalsäure und Terephthalsäure sowie deren Gemische.

Die erfindungsgemäß einzusetzenden Polycarbonate gemäß Komponente a) können anstelle der Kohlensäurereste auch p-Hydroxybenzoesäurereste in Mengen von ≤25 Mol%, bezogen auf die Molsumme an Säureresten in Polycarbonat, enthalten.

Thermoplastische Styrolpolymerisate gemäß Komponente b) im Sinne dieser Erfindung sind Polymerisate, die mindestens 30 Gew.-%, bevorzugt mindestens 45 Gw.-% und insbesondere mindestens 60 Gew.-% mindestens einer Verbindung aus der Gruppe des Styrols und seiner Abkömmlinge einpolymerisiert enthalten. Bevorzugt werden weiterhin Polymerisate, die 65 bis 100, bevorzugt 65 -99, besonders bevorzugt

90 - 98 und insbesondere 93 -98 Gew.-% mindestens einer Verbindung aus der Gruppe des Styrols und seiner Abkömmlinge einpolymerisiert enthalten.

Zu der Gruppe des Styrols und seiner Abkömmlinge zählen beispielsweise Styrol, α-Methylstyrol, p-Methylstyrol, 3,4-Dimethylstyrol, o- und p-Divinylbenzol, α- Chlorstyrol, p-Chlorstyrol, 2,4-Dichlorstyrol und p-Chlor-α-methylstyrol. Bevorzugt werden Styrol, α-Methylstyrol und p-Methylstyrol, besonders bevorzugt das Styrol.

In den thermoplastischen Styrolpolymerisaten dieser Erfindung kann mindestens ein Comonomer in komplementären Mengen zu den oben angegebenen Mengen des Styrols und seiner Abkömmlinge enthalten sein. Als Comonomere sind Verbindungen mit mindestens einer olefinischen Doppelbindung, wie z.B. Allylverbindungen, Diene, Vinylverbindungen, Acryl- und Methacrylverbindungen sowie Fumar-und Maleinsäure und deren Abkömmlinge einsetzbar. Sowohl ein als auch mehrere Comonomere können neben dem Styrol und seinen Abkömmlingen eingesetzt werden.

Von den genannten Comonomeren werden die Acryl- und Methacrylverbindungen, wie z.B. Acrylsäure, Methacrylsäure, Acryl- und Methacrylamide, Acrylsäurebutylester, Methylmethacrylat, Acrylnitril und Methacrylnitril, sowie die Maleinsäureabkömmlinge, wie z.B. Maleinsäureanhydrid, α-Methylmaleinsäureanhydrid, N-Methylmaleinimid, N-Phenylmaleinimid, N-(p-Methylphenyl)-maleinimid, bevorzugt. Besonders bevorzugt werden Acrylnitril, Methylmethacrylat, Maleinsäureanhydrid und N-Phenylmaleinimid, ganz besonders das Acrylnitril.

Die thermoplastischen Styrolpolymerisate können nach be kannten Verfahren der radikalischen Polymerisation hergestellt werden, z.B. durch Polymerisation in Masse, in Lösung, in Emulsion oder durch kombinierte Verfahren wie Lösungs-, Fällungs- oder Massesuspensionsverfahren. Es können jedoch auch noch andere bekannte Verfahren zur Herstellung der Styrolpolymerisate benutzt werden, wie z.B. ionische Polymerisationsverfahren und Verfahren mit metallorganischen Mischkatalysatoren (Ziegler-Natta-Verfahren).

Die Molekulargewichte der erfindungsgemäß einsetzbaren Styrolpolymerisate können in weiten Grenzen variieren.

Bevorzugt werden Molekulargewichte Mw von 5 000 -5 000 000, besonders bevorzugt von 15 000 - 1 000 000, ganz besonders bevorzugt von 20 000 - 200 000.

Die erfindungsgemäß einsetzbaren thermoplastischen Styrolpolymerisate können linear oder verzweigt sein. Die Verzweigung kann durch Einsatz von verzweigten Verbingungen, z.B. Divinylbenzol, als Comonomer erfolgen, oder auch durch Ausbildung von Verzweigungsstellen auf andere Weise, z.B. durch radikalische Pfropfung während der Polymerisation.

Übliche Additive gemäß Komponente c) im Sinne der vorliegenden Erfindung betrifft nicht Verträglichkeitsvermittler gemäß Lehre der EP-OS 0 199 824, sondern vielmehr vor allem Stabilisatoren gegen Hitze, UV-Licht-und Feuchtigkeit für die Komponenten a) und b) der erfindungsgemäß zu verwendenden Kunststoffgemische. Weiter seien genannt Flammschutzmittel, Gleit- und Entformungsmittel und weitere Verarbeitungshilfsmittel, vorausgesetzt, daß diese die optische Qualität der Kunststoffgemische aus den Komponenten a) und b) nicht beeinflussen.

Die Herstellung der erfindungsgemäß zu verwendenden Formmassen aus den Komponenten a) und b) und gegebenenfalls c) kann über deren Lösung in organischen Lösemitteln oder Lösemittelgemischen mit anschließender Abdampfung des Lösemittels erfolgen, z.B. in Ausdampfknetern oder Ausdampfextrudern. Sie kann jedoch auch direkt über die Schmelze erfolgen, z.B. auf Mischwalzen, Knetern oder Extrudern. Die Mischung der Ausgangskomponenten über die Schmelze erfolgt im allgemeinen bei 180 - 450, bevorzugt bei 220-400, besonders bevorzugt bei 260 - 360 und insbesondere bei 290 - 340 °C Schmelzetemperatur.

Die Einarbeitung der Additive gemäß Komponente c) kann gegebenenfalls auch nachträglich in das Gemisch der Komponenten a) + b) erfolgen.

Es können aber auch Additivhaltige Komponenten a) beziehungsweise b) eingesetzt werden, also eine Vorabmischung der Komponenten a) und/oder b) mit den Additiven c) erfolgen.

Die Verarbeitung der thermoplastischen Formmassen aus den Komponenten a), b) und gegebenenfalls c) erfolgt bevorzugt bei 260 - 360, insbesondere bei 290 - 340 °C Schmelzetemperatur.

Das Mischungsverhältnis Polycarbonat/Styrolpolymerisat der erfindungsgemäßen Mischungen beträgt bevorzugt 90/10 - 20/80, besonders bevorzugt 90/10 - 40/60 und ganz besonders bevorzugt 85/15 - 75/25 und 65/35 - 45/55.

Die erfindungsgemäß zu verwendenden Mischungen enthalten bevorzugt 5 - 80 Gew.-% Styrolanteil (als Polystyrol und/oder Styrolanteil des Copolymerisats), besonders bevorzugt 10 - 65 Gew.-%, ganz besonders bevorzugt 20-55 Gew.-%.

Die erfindungsgemäß zu verwendenden Mischungen haben, nicht zuletzt aufgrund ihrer hervorragenden Verträglichkeit, technisch wertvolle Eigenschaften, die sie für optische Anwendungen, insbesondere auf dem

Gebiet optischer Speichermedien geeignet machen.

Solche optischen Speichermedien sind beispielsweise nur lesbare optische Speicher (Optical Read Only Memory, OROM) einmalig zu beschreibende optische Speicher (Write Once Read Mostly,WORM) und löschbare und wieder zu beschreibende optische Speicher, ggf. mehrfach (Erasable Optical Disc, EOD). Bekannte Anwendungen von OROM-Speichern sind Video Long Play (VLP), Audio compact disc (CD), CD Read Only Memory (CD-ROM), CD Interactive (CD-I). EOD-Speichermedien nutzen z.Z. drei verschiedene Mechanismen, die reversible Phasenumkehr (Phase Change, PC), die reversible Farmumkehr (Colour Change, CC) und die reversible Magnetisierung (Magneto Optical Recording, Thermo Magneto Optic, MOR).

Optische Speicher sind beispielsweise in folgenden Literaturstellen beschrieben: J. Henning, Kunststoffe für optische Plattenspeicher, Kunststoffe 75, (1985) 7, S. 425 - 430; W. Siebourg, Polycarbonat - ein Werkstoff für optische Speichermedien, Kunststoff 76 (1986) 10, S. 917 - 919); Egon Schmidt, Ein einfacher magnetooptischer Speicher, Frankfurter Allgemeine Zeitung vom 3.6.1987, Rubrik Naturwissenschaft und Technik.

Die optischen Datenspeicher bestehen im allgemeinen aus einer polymeren Basisplatte oder einer polymeren Basisfolie (gegebenenfalls Verbundfolie), auf die eine Informationsschicht aufgebracht wird. Mit Hilfe eines Lichtstrahls, z.B. eines Laserstrahls, wird die Information von solch einem Datenspeicher abgerufen, auf solch einem Datenspeicher eingeschrieben oder auch von solch einem Datenspeicher gelöscht. Dabei durchläuft der Lichtstrahl die Polymerplatte oder Polymerfolie. Für den Einsatz als Basisplatte oder Basisfolie einer informationstragenden Datenspeicherplatte oder Datenspeicherfolie eignen sich nur wenige Polymere, und diese auch nur begrenzt, da sie nicht alle geforderten Eigenschaften erfüllen.

Als Polymere für die Herstellung von Basisplatten oder Basisfolien für optische Speichermedien werden bisher Polymethylmethacrylate und Polycarbonate aus 2,2-Bis-(4-hydroxyphenyl)-propan (Bisphenol A) eingesetzt. Beschrieben werden auch, wie bereits erwähnt, in der Japanischen Offenlegungsschrift Sho-61-19656 und der europäischen Offenlegungsschrift 0 199 824 die Verwendung von Kunststoffmischungen für optische Verwendungszwecke.

Die erfindungsgemäße Verwendung der Mischungen aus den Komponenten a) und b) und gegebenenfalls c) ist deshalb so vorteilhaft, da diese Mischungen ein sehr günstiges Eigenschaftsbild aufweisen, welches sich auszeichnet durch:

1. Hohe Wärmeformbeständigkeit
2. Hohe Fließfähigkeit der Schmelze
3. Große Oberflächengüte
4. Hohe Abbildegenauigkeit bei der Verarbeitung
5. Hoher Glanz
6. Gute Metallhaftung
7. Hohe Transparenz
8. Gute Thermostabilität
9. Leichte Entformbarkeit
10. Geringe Doppelbrechung in einer Platte
11. Große Gleichmäßigkeit der Doppelbrechung über eine Platte
12. Gute mechanische Eigenschaften
13. Geringe Neigung zur Bildung von Mikrorissen
14. Geringe Wasseraufnahme.

Sowohl einzelne der genannten guten Eigenschaften, als insbesondere auch die Kombination dieser guten Eigenschaften machen die Formmassen dieser Erfindung zu einem Basismaterial optischer Datenspeicher, wie es bisher nicht zur Verfügung stand.

Besonders zu erwähnen sind von den guten mechanischen Eigenschaften die überraschend hohen E-Moduli der erfindungsgemäßen Polymermischungen, die deutlich über den Werten liegen, die sich aus der Zusammensetzung und den E-Moduli der Einzelkomponenten rechnerisch ermitteln lassen. Infolge dieser hohen E-Moduli, der geringen Wasseraufnahme, der geringen Doppelbrechung und ihrer guten Konstanz über den gesamten Plattenbereich ist es möglich, hochwertige optische Speicherplatten mit Durchmessern auch oberhalb von 14 cm Durchmesser, bevorzugt oberhalb von 20 cm und insbesondere oberhalb von 25 cm Durchmesser aus den erfindungsgemäßen Polymermischungen herzustellen.

Die Formmassen dieser Erfindung eignen sich besonders für nur lesbare optische Speicher (OROM), ganz besonders jedoch für einmalig zu beschreibende optische Speicher (WORM) und insbesondere für löschbare und wieder zu beschreibende Speicher (EOD).

Beispiele 1 - 5:

Mischungen aus 1, 1, 3, 4, 6-Pentamethyl-3-(3,5-dimethyl-4-hydroxyphenyl)-indan-5-ol-Copolycarbonaten und Styrolharzen sowie zum Vergleich eine Mischung aus 2,2-Bis-(4-hydroxyphenyl)-propan-Polycarbonat und Styrol-Maleinsäureanhydrid-Copolymer.

Eingesetzte Polymere:

A. 1, 1, 3, 4, 6-Pentamethyl-3-(3,5-dimethyl-4-hydroxyphenyl)-indan-5-ol/2,2-Bis-(3,5-dimethyl-4-hydroxyphenyl)-propan-Copolycarbonat 7/93 Molteile (PC-JP), als Kettenbegrenzer p-Isooctylphenol ein-kondensiert, $\eta_{rel}$ = 1,240 (gemessen bei 25° C in Methylenchlorid, c = 5 g/l).

B. 1, 1, 3, 4, 6-Pentamethyl-3-(3,5-dimethyl-4-hydroxyphenyl)-indan-5-ol/Bis-(3,5-dimethyl-4-hydroxyphenyl)-methan-Copolycarbonat 7.93 Molteile (PC-IM), als Kettenbegrenzer p-Isoctylphenol ein-kondensiert, $\eta_{rel}$ = 1,236 (gemessen bei 25° C in Methylenchlorid, c = 5 g/l).

C. 1, 1, 3, 4, 6-Pentamethyl-3-(3,5-dimethyl-4-hydroxyphenyl)-indan-5-ol/2,2-Bis-(3,5-dimethyl-4-hydroxyphenyl)-butan-Copolycarbonat 7.93 Molteile (PC-IB), als Kettenbegrenzer p-Isooctylphenol ein-kondensiert, $\eta_{rel}$ = 1,229 (gemessen bei 25° C in Methylenchlorid, c = 5 g/l).

D. 2,2-Bis-(4-hydroxyphenyl)-propan-Polycarbonat (PC-A), als Kettenbegrenzer p-tertiär-Butylphenol ein-kondensiert, $\eta_{rel}$ = 1,232 (gemessen bei 25° C in Methylenchlorid, c = 5 g/l).

E. Styrol-Acrylnitril-Copolymer 94/6 Gewichtsteile (SAN-6), $\overline{M}_w$ = 155 000 (gemessen durch Gelpermeationschromatographie).

F. Styrol-Acrylnitril-Maleinsäureanhydrid-Copolymer 94/3/3 Gewichtsteile (SAMA 3-3), $\overline{M}_w$ = 175 000 (gemessen durch Gelpermeationschromatographie).

G. Styrol-Maleinsäureanhydrid-Copolymer 95/5 Gewichtsteile (SMA 5), $\overline{M}_w$ = 195 000 (gemessen durch Gelpermeationschromatographie).

H. Styrol-Maleinsäureanhydrid-Copolymer 91/9 Gewichtsteile (SMA 9), $\overline{M}_w$ = 250 000 (gemessen durch Gelpermeationschromatographie).

J. Styrol-Methylmethacrylat-Copolymer 75/25 Gewichtsteile (SMM-25), $\overline{M}_w$ = 220 000 (gemessen durch Gelpermeationschromatographie).

Die obengenannten Polymeren wurden, wie aus der Tabelle 1 hervorgeht, im Verhältnis Polycarbonat/Styrolpolymer 60/40 über die Schmelze bei 280° C gemischt. Die Polymermischungen wurden dann bei 320° C Massetemperatur zu Compact-Discs mit 12 cm Durchmesser und 0,12 cm Dicke verspritzt. Diese Compact-Discs wurden dann auf ihre Transparenz visuell untersucht und auf ihre Doppelbrechung hin vermessen. Bei der Messung der Doppelbrechung wurden Messungen in verschiedenen Abständen vom Disc-Mittelpunkt vorgenommen, außerdem wurden die Messungen in drei Richtungen zur Disc vorgenommen (achsial, tangential, radial). Die Ergebnisse der Tabelle zeigen die hervorragend niedrige und gleichmäßige Doppelbrechung der erfindungsgemäßen Discs, während die Vergleichsdisc wesentlich höhere und ungleichmäßigere Doppelbrechungswerte liefert.

Tabelle 1

| Doppelbrechung und Transparenz der erfindungsgemäßen optischen Speichermedien | | | | | |
|---|---|---|---|---|---|
| Beispiel Nr. | Polymerischung 60/40 | Untersuchungen an Compact-Discs, ∅ 12 cm, Dicke 0,12 cm | | | |
| | | Transparenz | Gangunterschied (Doppelbrechung) in nm/mm, Entfernung vom Disc-Mittelpunkt | | |
| | | | 25 mm 1/2/3 | 40 mm 1/2/3 | 55 mm 1/2/3 |
| 1 | PC-JP/SAN 6 | klar | 0/-143/+151 | 0/-150/+141 | -1/-147/+145 |
| 2 | PC-JP/SAMA 3-3 | klar | 2/-147/+135 | 0/-152/+141 | -1/-143/+151 |
| 3 | PC-JM/SAN 6 | klar | 0/-137/+153 | -1/-145/+142 | -1/-147/+145 |
| 4 | PC-IB/SMA 5 | klar | 1/-140/+136 | 0/-136/+139 | 0/-137/+150 |
| 5 | PC-IP/SMM 25 55/45 Gew.-Teile | klar | 1/-137/+140 | 1/-141/+145 | -1/-140/+138 |
| V | PC-A/SMA 9 (Vergleich entsprechend JA 61 - 19 656 | trüb | -45/-328/+292 | -35/-356/+356 | +52/-370/+399 |
| 1 = achsial<br>2 = tangential<br>3 = radial | | | | | |

Die Ergebnisse der Tabelle geben außerdem wieder, daß die erfindungsgemäßen Discs im Gegensatz zur nicht erfindungsgemäßen Disc (Vergleich) klar durchsichtig sind.

Beispiele 6 - 17:

In Tabelle 2 werden die E-Moduli der Polymermischungen der Beispiele 1 - 5 (Beispiele 6 - 10) und der Ausgangskomponenten (Beispiele 11 - 17) gegeben. Es zeigt sich, daß die Mischungen E-Moduli aufweisen, die höher sind, als aus dem Mischungsverhältnis der Ausgangskomponenten und deren E-Moduli errechenbar ist.

| Bsp. | Polymer bzw. Polymermischung 60/40 Gew.-Teile | Zug-E-Modul [MPa] |
|---|---|---|
| 6 | PC-JP/SAN 6 | 3 100* |
| 7 | PC-JP/SAMA 3-3 | 3 100* |
| 8 | PC-JM/SAN 6 | 3 100* |
| 9 | PC-JB/SMA 5 | 3 100* |
| 10 | PC-JP/SMM 25 | 3 100* |
| 11 | PC-JP | 2 400 |
| 12 | PC-JM | 2 400 |
| 13 | PC-JB | 2 400 |
| 14 | SAN 6 | 3 300 |
| 15 | SAMA 3-3 | 3 300 |
| 16 | SMA 5 | 3 300 |
| 17 | SMM 25 | 3 300 |

* rechnerischer Wert 2 760 MPa

## Ansprüche

1. Verwendung von Mischungen bestehend aus

a) 5 bis 95 Gew.% eines aromatischen Polycarbonates, dessen lineare Ketten von 0,1 Mol% bis 50 Mol% bifunktionelle Struktureinheiten der Formel (1)

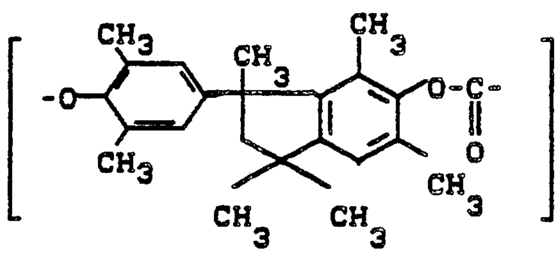 (1)

und 99,9 Mol% bis 50 Mol% andere bifunktionelle Struktureinheiten der Formel (2)

$[-O-D-O-\underset{\underset{O}{\|}}{C}-]$ (2)

enthalten, worin -O-D-O- andere Diphenolat-Reste als die in der Formel (1) sind,

b) 95 bis 5 Gew% eines thermoplastischen Styrolpolymerisats und gegebenenfalls

c) üblichen Additiven in üblichen Mengen, wobei die Summe der Komponenten a) + b) jeweils 100 Gew% beträgt und die Menge an Additiv c) sich auf jeweils 100 Gew% der Summe der Komponenten a) + b) bezieht, als Substrate für optische Speicher.